# EUROPÄISCHE PATENTSCHRIFT

(11) **EP 1 750 155 B1**
(45) Veröffentlichungstag und Bekanntmachung des Hinweises auf die Patenterteilung: **10.10.2012**
(21) Anmeldenummer: 05016687.5
(22) Anmeldetag: 01.08.2005
(51) Int. Cl.: B01L 3/00, B29C 65/48, B29C 65/02, B29C 59/14

(54) **Verfahren zur Herstellung einer Probenkammer**
Method of fabricating a sample chamber
Procédé de fabrication d'une chambre d'échantillon

(43) Veröffentlichungstag der Anmeldung: 07.02.2007
(60) Teilanmeldung: 10177995.7
(73) Patentinhaber: ibidi GmbH, 82152 Martinsried (DE)
(72) Erfinder: Kahl, Johan-Valentin, 80636 München (DE); Zantl, Roman, 85598 Baldham (DE)
(74) Vertreter: Grünecker, Kinkeldey, Stockmair & Schwanhäusser

(56) Entgegenhaltungen:
- EP-A- 0 290 125
- EP-A- 1 319 495
- WO-A-89/11500
- DE-A1- 10 148 210
- US-A- 5 597 456
- US-A- 6 083 355
- US-A1- 2005 164 373

## Beschreibung

Die Erfindung betrifft die Herstellung einer Probenkammer mit einer Deckplatte und einer fest damit verbundenen Bodenplatte, wobei in der Deckplatte eine Aussparung vorgesehen ist, um mit der Bodenplatte ein wenigstens teilweise abgeschlossenes Reservoir zu bilden.

Eine derartige Probenkammer ist beispielsweise aus der DE 101 48 210 bekannt. Die bekannte Probenkammer weist mikrofluidische Strukturen, wie Mikrofluidkanäle oder - reservoire, auf. Bei der aus der DE 101 48 210 bekannten Probenkammer ist eine Nut in einer Kunststoffplatte vorgesehen, die durch eine Folie abgedeckt wird, so dass ein Mikrokanal gebildet wird. Auf der der Nut gegenüberüegenden Oberfläche der Kunststoffplatte sind zwei kreisförmige Reservoire angeordnet, die mit dem Kanal in Fluidverbindung stehen.

Die bekannten Probenkammern werden insbesondere zur Mikroskopie von Molekülen (Z. B. DNA) oder Zellen verwendet. Die zu untersuchenden Substanzen werden mit einer Flüssigkeit in ein Reservoir der Probenkammer gegeben und können dann mit hochauflösenden Verfahren (beispielsweise Durchlichtmikroskopie, Fluoreszenzmikroskopie, konfokale Mikroskopie, etc.) untersucht werden.

Die aus dem Stand der Technik bekannten Probenkammern weisen jedoch den Nachteil auf, dass eingebrachte nichtadhärente Moleküle oder Zellen nur schwer beobachtet und untersucht werden können, da diese bei einem Austausch der Flüssigkeit in der Mikrofluidstruktur weggespült werden. So haften beispielsweise gewisse Bakterien nicht an Glasoberflächen.

Aus der US 2005/0164373 ist ein Lade-System für mikrofluidische Vorrichtungen bekannt. Eine derartige Mikrofluid-Vorrichtung umfasst ein Substrat und eine Abdeckschicht in Form eines Substratträgers. Das Substrat umfasst eine Mehrzahl von Eingangsöffnungen, Eingangskanälen, Probenbereichen und Ausgangsöffnungen.

Aus der EP 1 319 495 ist ein Verfahren zum Verbinden von Filmen mit einer hydrophilisierten Oberfläche bekannt.

Die Erfindung stellt ein Verfahren zum Herstellen eines Probenkammer gemäß Anspruch 1 bereit. Die Probenkammer umfasst eine Deckplatte und eine fest damit verbundene Bodenplatte, wobei in der Deckplatte eine Aussparung vorgesehen ist, so dass durch die Bodenplatte ein Reservoir gebildet wird, wobei in dem Reservoir ein flächiges Element mit Öffnungen vorgesehen ist, wobei die Öffnungen eine vorherbestimmte Anordnung und/oder Dimensionierung aufweisen.

In den Öffnungen des flächigen Elements können zu untersuchende Moleküle oder Zellen gehalten werden und auf Grund einer vorherbestimmten Anordnung präzise lokalisiert werden. Damit können in derartigen Probenkammern beispielsweise Suspensionskulturen gehalten werden. Auch bei einem Austausch von Flüssigkeiten verbleiben eingebrachte Moleküle oder Zellen in den Öffnungsstrukturen.

Das flächiges Element kann insbesondere flexibel sein. Es kann ein Gewebe, insbesondere ein Netz, oder eine Folie umfassen. Derartige Materialien erlauben eine einfache Handhabung, insbesondere bei der Herstellung einer entsprechenden Probenkammer. Das flächiges Element kann auch ein Elektronenmikroskopie-Grid umfassen, das beispielsweise Gold oder Kupfer umfasst und ggf. mit Kohlenstoff beschichtet sein kann. Bei dem Gewebe kann es sich insbesondere um ein offenmaschiges Monofilament-Gewebe handeln, wie beispielsweise die Präzisionsgewebe des Schweizer Herstellers Sefar. Das Material kann Polyamid (PA), Polyester (PET), Polypropylen (PP), Ethylen-Tetrafluorethylen-Copolymer (ETFE) oder Polyetheretherketon (PEEK) umfassen oder daraus bestehen.

Das flächige Element kann in dem Reservoir parallel zu der Bodenplatte angeordnet sein. Dies ermöglicht eine besonders vorteilhafte Beobachtung durch die Bodenplatte.

Das flächige Element kann zwischen der Bodenplatte und der Deckplatte eingespannt sein. Dies bedeutet, dass das flächige Element eine größere Fläche als die entsprechende Querschnittsfläche des Reservoirs (beispielsweise die Reservoirgrundfläche) aufweist. Bei der Herstellung der Probenkammer wird das flächige Element derart zwischen der Bodenplatte und der Deckplatte angeordnet, dass es nach dem Zusammenfügen und Verbinden der beiden zwischen die Bodenplatte und die Deckplatte geklemmt ist. Damit kann die Probenkammer in einfacher und zuverlässiger Weise hergestellt werden, wobei das flächige Element stabil und fest in dem Reservoir angeordnet ist.

Die Öffnungen des flächigen Elements können Durchmesser von 2 - 500 µm, vorzugsweise 10 - 200 µm, aufweisen, das flächige Element kann eine Dicke von 3 - 500 µm, vorzugsweise 40 - 300 µm, und/oder einen Abstand zu der Bodenplatte von 0 - 100 µm. vorzugsweise 0 - 10 µm, aufweisen. Das Flächengewicht des flächigen Elements kann zwischen 10 und 700 g/m², vorzugsweise 10 - 100 g/m², liegen. Die offene Fläche, d.h. die Gesamtfläche der Öffnungen an der Oberfläche bezogen auf die Gesamtfläche des flächigen Elements, kann zwischen 15 - 60 %, vorzugsweise zwischen 20 und 50 %, liegen. Bei einem offenmaschigen Gewebe oder Netz kann die Maschenweite zwischen 10 und 500 µm, vorzugsweise 10 - 100 µm, und der Gamdurchmesser zwischen 3 - 500 µm, vorzugsweise zwischen 10 und 100 µm, liegen.

Durch eine geeignete Wahl dieser Parameter kann das flächiges Element an die zu untersuchenden Substanzen genau angepasst werden. Bei Offnungsdurchmessem in der Größenordnung des Durchmessers beispielsweise von zu untersuchenden Zellen kann in einer Öffnung jeweils eine Zelle gehalten werden. Bei der Verwendung von größeren Öffnungsdurchmessem können die Zellen dann in ihrer nativen dreidimensionalen Struktur wachsen.

Insbesondere können der Durchmesser der Öffnungen und/oder der Abstand zu der Bodenplatte konstant sein. Weiterhin können die Öffnungen regelmäßig, insbesondere auf einem Gitter, d.h. in Form eines Gitters, angeordnet sein.

Das flächige Element kann eine vorherbestimmte Farbe, ein vorherbestimme Eigenfluoreszenz, insbesondere kleiner oder gleich der Eigenfluoreszenz von COC oder COP oder eines herkömmlichen Deckglases (beispielsweise reinweißes Glas der hydrolytischen Klasse 1, wie Menzel-Deckglas, insbesondere mit der Stärke Nr. 1,5), und/oder einen vorherbestimmten Brechungsindex, insbesondere größer als 1,2 und/oder kleiner als 1,7, aufweisen.

Somit lassen sich die Parameter je nach Art der gewünschten Untersuchung geeignet anpassen. Beispielsweise kann für die Durchlichtmikroskopie ein kontrastreiches Material, insbesondere mit einer dunklen Farbe, verwendet werden. Bei Fluoreszenzmikroskopieuntersuchungen können, je nach Anwendung, Materialien mit einer hohen oder einer geringen Eigenfluoreszenz eingesetzt werden. Durch eine entsprechende Wahl des Brechungsindizes kann das flächige Element sogar als Lichtleiter verwendet werden.

Das flächige Element kann wenigstens teilweise ein lösungsmittellösliches Material umfassen. Das flächige Element kann ein anderes Material umfassen als ein oder das Material der Bodeplatte und/oder der Deckplatte. Insbesondere kann das flächige Element ein Material umfassen, das bei einem ersten Lösungsmittel löslich ist, und die Bodenplatte und/oder die Deckplatte ein Material umfassen, das bei einem anderen Lösungsmittel löslich ist. Auf diese Weise kann in einer Probenkammer die Bodenplatte in dem Reservoir zunächst mit einem Lösungsmittel angelöst werden; das flächige Element kann derart angeordnet sein, dass es dabei in der angelösten Oberfläche einen Abdruck hinterlässt. Anschließend kann das flächige Material mit einem anderen Lösungsmittel aufgelöst werden, das die Oberfläche der Bodenplatte nicht angreift, so dass der Abdruck des flächigen Elements verbleibt.

Durch die fest mit der Deckplatte verbundene Bodenplatte wird die Aussparung auf einer Seite der Deckplatte abgedeckt, so dass ein Reservoir gebildet wird. Weist die Aussparung keinen Grund auf, ist sie also in Form eines Loches ausgebildet, wird ein nach einer Seite hin offenes Reservoir gebildet. Deckt die Bodenplatte die Unterseite ab, bildet also den Boden des Reservoirs, so ist das Reservoir nach oben offen.

Die Aussparung in der Deckplatte kann einen Grund aufweisen, so dass durch die Bodenplatte ein Hohlraum gebildet wird. Auf Grund eines solchen Hohlraumes in der Deckplatte und damit in der Probenkammer können von der Umgebung abgeschirmte Untersuchungen durchgeführt werden.

Die Aussparung in der Deckplatte kann eine längliche Form aufweisen. Beispielsweise kann die Aussparung eine Nut in der Deckplatte umfassen. In diesem Fall wird die Probenkammer in Form einer Flusskammer ausgebildet.

Die Deckplatte und/oder die Bodenplatte können derart ausgebildet sein, dass die Probenkammer einen von außen in das Reservoir mündenden Kanal umfasst. Insbesondere kann in der Deckplatte und/oder der Bodenplatte ein in das Reservoir mündendes Durchgangsloch ausgebildet sein. In der Deckplatte kann eine Nut zur Ausbildung des Kanals vorgesehen sein. Insbesondere können zwei oder mehr in das Reservoir mündende Kanäle vorgesehen sein.

Ein derartiger Kanal dient als Zu- oder Abfluss für das Reservoir, das auf diese Weise mit Flüssigkeiten und/oder anderen Substanzen befüllt werden kann.

Die der Aussparung gegenüberliegende Oberfläche der Deckplatte weist einen planaren Bereich und eine Erhöhung auf, wobei in der Erhöhung eine Ausnehmung ausgebildet ist, die über einen Kanal mit dem Reservoir verbunden ist. Die Ausnehmung kann ebenfalls als Reservoir dienen und/oder zur Aufnahme einer Zuflusseinrichtung, wie einer Pipette, ausgebildet sein. Weiterhin kann ein ein- oder zweidimensionales Array von Erhöhungen (beispielsweise insgesamt 96 Erhöhungen) vorgesehen sein, wobei in jeder Erhöhung eine Ausnehmung ausgebildet ist.

Die Bodenplatte kann eine Dicke von 50 - 250 µm, vorzugsweise 100 - 200 µm, aufweisen. Eine solche Bodenplatte ermöglicht in vorteilhafter Weise eine Anwendung der inversen Mikroskopie.

Die Deckplatte, die Bodenplatte und/oder das flächige Element können einen Kunststoff, insbesondere ohne Doppelbrechung und/oder mit einer Eigenfluoreszenz, die im wesentlichen gleich der Eigenfluoreszenz eines herkömmlichen Deckglases ist, umfassen. Ein solcherart optisch hochwertiger Kunststoff verbessert Mikroskopieuntersuchungen, insbesondere bei der Anwendung von Fluoreszenzmikroskopie. Insbesondere kann die Bodenplatte ein flexibles Material, beispielsweise eine Folie, umfassen.

Die Bodenplatte, die Deckplatte und/oder das flächige Element können mittels Klebemittel, Lösungsmittel, UV-Behandlung, radioaktive Behandlung, Laserbehandlung oder thermischem Verschweißen verbunden sein. Das thermische Verschweißen kann flächig oder streifenförmig, insbesondere nur entlang des Rands der Bodenplatte und/oder der Deckplatte, erfolgt sein. Dies ermöglicht in vorteilhafter Weise eine feste Verbindung von Deckplatte und Bodenplatte.

Mögliche Kunststoffe sind beispielsweise COC (Cyclo-Olefin Copolymer), COP (Cyclo-Olefin Polymer), PE (Polyethylen), PS (Polystyrol), PC (Polycarbonat) oder PMMA (Polymethylmetacrylat).

Die Grundfläche der Probenkammer kann die Abmessungen eines herkömmlichen Mikroskopieobjektträgers, insbesondere eine Breite von 25,5 mm und eine Länge von 75,5 mm, oder einer Multititerplatte aufweisen. Das durch eine Aussparung in der Deckplatte gebildete Reservoir der Probenkammer kann ein Volumen von zwischen 10 und 200 µl, vorzugsweise zwischen 20 und 150 µl, aufweisen; die Höhe kann zwischen 5 µm und 1 mm, vorzugsweise zwischen 0,1 mm und 0,5 mm, die Breite zwischen 10 µm und 40 mm, vorzugsweise zwischen 1 und 10 mm, liegen. Die Höhe der Probenkammer in einem planaren Bereich der Deckplatte kann zwischen 0,5 und 5 mm, vorzugsweise zwischen 1 und 2 mm, insbesondere bei 1,7 mm, liegen. Weist die Deckplatte der Probenkammer eine Erhöhung auf, in der eine Ausnehmung ausgebildet ist, so kann das Volumen eines derart gebildeten Reservoirs zwischen 50 µl und 3 ml, vorzugsweise zwischen 80 µl und 2,5 ml liegen; die Höhe einer Erhöhung ausgehend von einem planaren Bereich kann zwischen 1 mm und 1,5 cm, vorzugsweise zwischen 5 mm und 1 cm, liegen.

Durch die Erfindung wird ein Verfahren zum Herstellen einer Probenkammer mit den Schritten bereitgestellt:
Bereitstellen einer Deckplatte und einer Bodenplatte, wobei in der Deckplatte eine Aussparung vorgesehen ist, um durch die Bodenplatte ein Reservoir zu bilden, und wobei die der Aussparung gegenüberliegende Oberfläche der Deckplatte einen planaren Bereich und eine Erhöhung aufweist,

Behandeln eines Bereichs der Oberfläche der Deckplatte und/oder der Bodenplatte, um eine Haftschicht zu erhalten,

Verpressen der Deckplatte und der Bodenplatte, um diese mittels der Haftschicht zu verbinden, wobei der planare Bereich und die Erhöhung in voneinander getrennten Schritten wenigstens teilweise mit Druck beaufschlagt werden.

Durch das Verpressen in zwei getrennten Schritten einerseits des planaren Bereichs und andererseits der Erhöhung können diese unterschiedlichen Bereiche sehr präzise und gleichmäßig mit einem geeigneten Druck beaufschlagt werden. Damit kann eine Verformung oder Zerstörung des Materials verhindert werden.

Das zuvor genannte Verfahren kann insbesondere zur Herstellung der zuvor beschriebenen Probenkammern verwendet werden.

Die Druckbeaufschlagung des planaren Bereichs kann mittels eines Presselements (oder Pressstempels) erfolgen, das an den Erhöhungen entsprechenden Stellen Aussparungen aufweist. Das Presselement kann derart ausgebildet sein, dass der planare Bereich der Deckplatte vollflächig mit Druck beaufschlagt wird. Alternativ oder zusätzlich können auch in Bereichen des Presselements, die Bereichen der Deckplatte entsprechen, an denen Aussparungen vorgesehen sind, Aussparungen vorgesehen sein. Damit können Zerstörungen auf Grund der Druckbeaufschlagung in diesen Bereichen vermieden werden.

Für die Druckbeaufschlagung der Erhöhungen kann ein zweites Presselement vorgesehen sein, das eine zu den Erhöhungen der Deckplatte komplementäre Form aufweist. Alternativ kann dieses Presselement eine planare Oberfläche aufweisen; auch damit lassen sich nur die Erhöhungen mit Druck beaufschlagen.

Die getrennten Schritte der Druckbeaufschlagung können in beliebiger Reihenfolge durchgeführt werden.

Das Behandeln eines Bereichs der Oberfläche, um eine Haftschicht zu erhalten, kann ein Aufbringen eines Klebemittels, ein Aufbringen eines Lösungsmittels zum Anlösen der Oberfläche, eine UV-Behandlung, eine radioaktive Behandlung oder eine Laserbehandlung umfassen. Insbesondere kann das Behandeln eines Bereichs der Oberfläche, ein Erwärmen der Oberfläche der Deckplatte und/oder der Bodenplatte über den Materialschmelzpunkt umfassen. Vorzugsweise kann dieses Erwärmen streifenförmig entlang des Rands der Bodenplatte und/oder der Deckplatte erfolgen.

Durch ein solches streifenförmiges thermisches Verschweißen wird der Rand der Probenkammer für viele Kriechmittel (wie sie beispielsweise bei der Verwendung von Ölimmersionen für die Mikroskopie auftreten) versiegelt. Da keine großflächige Erwärmung stattfindet, lassen sich Verformungen der Deckplatte und/oder der Bodenplatte vermeiden.

Ein Verfahren zum Oberflächenbehandeln, insbesondere zum Hydrophilisieren einer Reservoiroberfläche in einer Probenkammer , wobei die Probenkammer eine Deckplatte und eine fest damit verbundene Bodenplatte aufweist, wobei in der Deckplatte eine Aussparung mit Grund vorgesehen ist, so dass durch die Bodenplatte ein Hohlraumreservoir gebildet wird, umfaßt den Schritt:
Plasmabehandeln der Reservoiroberfläche, wobei das Plasma durch das Hohlraumreservoir geführt wird.

Überraschenderweise stellte sich heraus, dass es möglich ist, ein Plasma in derartige Mikrostrukturen zu führen, um dort die Oberfläche zu hydrophilisieren.

Vorzugsweise kann das Plasmabehandeln mit einem Atmosphärenplasma erfolgen. Dabei wird unter einem Atmosphärenplasma ein Plasma verstanden, das nicht im Unterdruck im Verhältnis zum Atmosphärendruck gezündet wird. Insbesondere kann es sich um eine Korona-Behandlung mit Umgebungsluft als Wirkgas oder um ein Atmosphärenplasma mit Stickstoff als Wirkgas handeln. Es hat sich gezeigt, dass bei der Verwendung von Stickstoff die Oberflächenfunktionalisierung wie z.B. eine Hydrophilisierung ausgeprägter und langlebiger ist.

Um das Plasma durch die Hohlraumstrukturen zu führen, ist ein Überdruck des Plasmagases vorteilhaft. Dabei sind Werte zwischen 1 bar und 8 bar besonders gut geeignet.

Wird das Plasma durch den Hohlraum geführt, ist in diesem üblicherweise ein Leuchten deutlich sichtbar.

Das Plasmabehandeln kann ein Kühlen des Plasmas und/oder der Probenkammer umfassen. Auf Grund dieses Kühlens kann ein Anschmelzen oder Verbrennen des Probenkammermaterials vermieden werden.

Vorzugsweise wird das Plasma nach seiner Erzeugung beispielsweise durch ein Metallrohr zu einem Zu-/Abfluss des Reservoirs geführt, wo es in das Reservoir der Probenkammer geleitet werden kann.

Es hat sich auch gezeigt, dass eine Oberflächenbehandlung wie eine Hydrophilisierung der Oberflächen durch die Verwendung von Abgasen aus einem Plasma realisiert werden kann. In diesem Fall kann das Plasmabehandeln erfolgen, in dem ein Plasmaabgas durch das Hohlraumreservoir geführt wird. Dazu kann z.B. ein Stickstoffplasma gezündet und anschließend das dort ionisierte/aktivierte Gas durch ein Rohr geführt werden (z.B. 10cm bis 1 m). Wird dieses Gas direkt vom (kalten) Rohrende in einen Hohlraum geführt, werden die Innenseiten des Hohlraumes ebenfalls hydrophilisiert. Typischerweise ist im Hohlraum dann kein Leuchten des Plasmas sichtbar.

Die zuvor beschriebenen Verfahren zum Obertlächenbehandeln wie z.B. zum Hydrophilisieren können insbesondere für eine der zuvor beschriebenen Probenkammern verwendet werden.

Ein Verfahren zum Immobilisieren einer Substanz mit einem Konzentrationsgradienten an einer Oberfläche bereit, umfast die
Bereitstellen einer Probenkammer mit einem Reservoir, insbesondere einer der zuvor beschriebenen Probenkammern
Behandeln einer Reservoiroberfläche, um ein Immobilisieren der Substanz zu ermöglichen,
Befüllen des Reservoirs mit einem ersten Fluid,
teilweises Befüllen des Reservoirs mit einem zweiten Fluid, das die zu immobilisierende Substanz enthält, so dass sich in dem Reservoir eine Grenzfläche zwischen dem ersten und dem zweiten Fluid bildet,
Spülen des Reservoirs mit einem dritten Fluid nach einer vorherbestimmten Zeitdauer.

Unmittelbar nach dem Befüllen des Reservoirs mit dem zweiten Fluid weist die Reservoiroberfläche auf der einen Seite der Grenzfläche eine Substanzkonzentration von im Wesentlichen 0 auf. Während des Wartens für eine vorherbestimmte Zeitdauer findet eine Diffusion der Substanz statt, so dass die nach der vorherbestimmten Zeitdauer an der Reservoiroberfläche immobilisierte Substanz einen Konzentrationsgradienten aufweist, der nach dem Spülen mit dem dritten Fluid auf Grund der Immobilisierung erhalten bleibt. Auf diese Weise kann ein definierter Oberflächenkonzentrationsgradient erzeugt werden.

Auch wenn unmittelbar nach dem Befüllen mit dem zweiten Fluid die Oberflächenkonzentration nicht im Wesentlichen 0 sein sollte, so ist doch beispielsweise ein parabolisches Abfallen vorhanden. Nach einer entsprechend langen Wartezeit sind die beiden Fluide durchmischt, wobei die Diffusionszeit bzw. die Diffusionskonstante von Parametern wie der Substanzgröße, Temperatur, Viskosität etc. abhängen kann. Vorzugsweise werden Flüssigkeiten als Fluide verwendet. Alternativ können jedoch auch Gase eingesetzt werden, wobei dann vorherbestimmte Druckverhältnisse in dem Reservoir eingestellt werden.

Das Behandeln einer Reservoiroberfläche, um ein Immobilisieren der Substanz zu ermöglichen, kann eine nasschemische Behandlung, umfassen. Beispiele für eine solche Nasschemie sind z.B. in S. Löfas and Bo Hohnson in J. Chem. Soc. ; Chem. Commun. 1990; 1526-1528 beschrieben. Der nasschemischen Behandlung kann eine Plasmabehandlung, wie zuvor beschrieben, vorangehen.

Als zu immobilisierende Substanz kann beispielsweise Streptavidin oder Biotin verwendet werden.

Weitere Merkmale werden an Hand der in den Figuren gezeigten beispielhaften Ausführungsformen erläutert. Dabei zeigen
- Fig. 1: eine Explosionsansicht einer Probenkammer mit einem flächigen Element in einem Reservoir;
- Fig. 2: eine Querschnittsansicht der Probenkammer aus Fig. 1;
- Fig. 3: eine Explosionsansicht einer Probenkammer mit einem flächigen Element geringerer Größe;
- Fig. 4: eine Explosionsansicht einer Probenkammer mit einer Mehrzahl nach oben offener Reservoire, bei der ein flächiges Element vorgesehen ist;
- Fig. 5: eine Explosionsansicht einer Probenkammer mit einer Mehrzahl nach oben offener Reservoire, in denen jeweils ein eigenes flächiges Element vorgesehen ist.

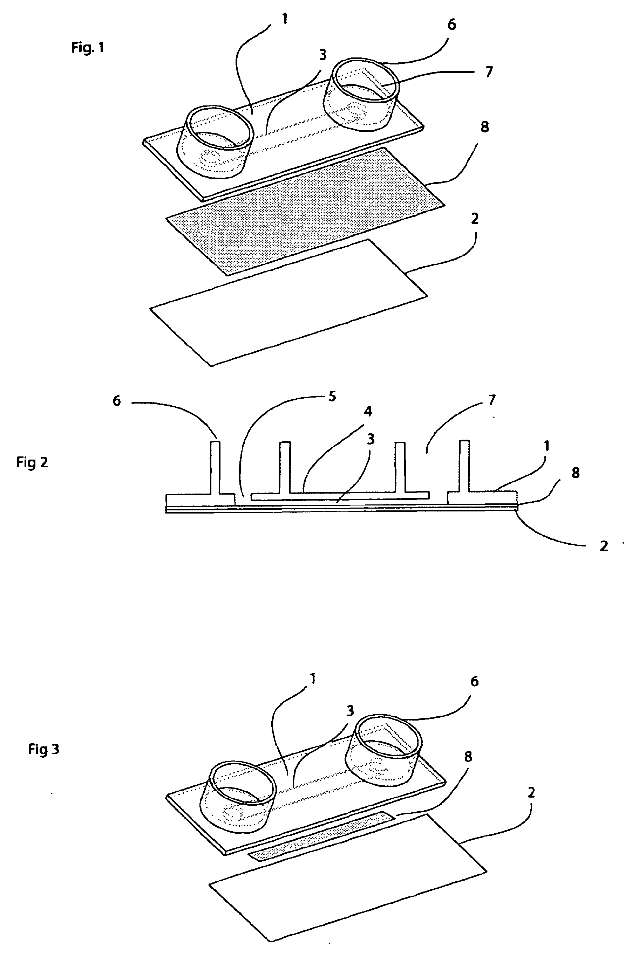

In Fig. 1 ist eine Explosionsansicht eines Ausführungsbeispiels einer erfindungsgemäß hergestellten Probenkammer gezeigt. Die Probenkammer umfasst eine Deckplatte 1 und eine Bodenplatte 2. In der Deckplatte 1 ist eine längliche Aussparung 3 vorgesehen. Wie insbesondere in Fig. 2 zu sehen ist, weist die Aussparung 3 einen Grund 4 auf, so dass auf diese Weise durch die Bodenplatte 2 ein Reservoir in Form eines Hohlraums in der Deckplatte und damit in der Probenkammer gebildet wird.

An den Enden der länglichen Aussparung ist jeweils ein Durchgangsloch 5 in der Deckplatte ausgebildet. Diese Kanäle dienen als Zufluss bzw. als Abfluss für das durch die Aussparung 3 gebildete Reservoir. Auf diese Weise wird eine Flusskammer gebildet.

Die der Aussparung 3 gegenüber liegende Oberfläche der Deckplatte ist in einem großen Bereich planar ausgebildet. Sie weist jedoch zwei Erhöhungen 6 auf, in denen jeweils eine Ausnehmung 7 ausgebildet ist. Auf diese Weise werden zwei weitere Reservoire bereitgestellt, die über ein Durchgangsloch 5 mit dem durch die Aussparung 3 gebildeten Reservoir fluidisch verbunden sind.

Zwischen der Deckplatte 1 und der Bodenplatte 2 ist ein flächiges Element 8 eingespannt. In dem durch die Aussparung 3 gebildeten Reservoir liegt dieses flächige Element 8 unmittelbar an der Bodenplatte 2 an.

Das flächige Element mit Öffnungen kann beispielsweise ein Elektromikroskopie-Grid aus mit Kohlenstoff beschichtetem Gold oder Kupfer, eine Folie mit vorherbestimmten Löchern oder ein Gewebe mit vorherbestimmter Maschenweite, Gamdurchmesser und Dicke sein. Die optischen Eigenschaften des flächigen Elements können je nach gewünschter Anwendung geeignet gewählt werden. Beispielsweise können zur Durchlichtmikroskopie sehr kontrastreiche Netze, d.h. mit dunkler Färbung, verwendet werden. Entsprechend können bei der Fluoreszenzmikroskopie flächige Elemente mit großer oder geringer Eigenfluoreszenz eingesetzt werden.

Das flächige Element kann einerseits dem Lokalisieren und andererseits dem Fixieren von Objekten dienen. Verwendet man beispielsweise ein Netz mit einer Dicke von 500 µm, einer Maschenweite von 100 µm, und wird dieses Netz unmittelbar an der Bodenplatte angeordnet, verbleiben bei laminarer Überströmung dieser Struktur Objekte, mit einem Durchmesser kleiner als 500 µm, in den Öffnungen. Für diese Anwendung kann der Abstand zwischen flächigem Element und Bodenplatte beispielsweise zwischen 0 und 100 µm liegen. Allerdings wird ein möglichst geringer Abstand bevorzugt, so dass weder Partikel noch Flüssigkeit zwischen der Bodenplatte und dem flächigen Element strömen können. Auf diese Weise dienen die Öffnungen in dem flächigen Element als Mikroreservoire.

Die Bodenplatte kann eine Folie mit einer Dicke von 150 - 200 µm sein. Je nach gewünschter Anwendung kann die Bodenplatte einen Brechungsindex von 1,5, eine minimale Eigenfluoreszenz und/oder eine minimale Doppelbrechung aufweisen. Geeignete Materialien sind beispielsweise Folien aus COC.

In dem vorliegenden Ausführungsbeispiel sind die Bodenplatte 2, das flächige Element 8 und die Deckplatte 1 fest miteinander verbunden. Hierfür wird beispielsweise ein der Deckplatte zugewandter Bereich der Bodenplatte mit einer Haftschicht versehen. Alternativ oder zusätzlich kann dies auch mit einem der Bodenplatte zugewandten Bereich der Deckplatte geschehen.

Beispielsweise kann auf die Bodenplatte ein Klebstoff aufgebracht werden. Alternativ kann die Bodenplatte mit einem geeigneten Lösungsmittel, wie Methanol oder Toluol, oder Lösungsmitteldampf in Kontakt gebracht werden, so dass die Oberfläche angelöst und auf diese Weise eine Haftschicht gebildet wird. Anschließend werden die Bodenplatte 2 und die Deckplatte 1 mit dem dazwischen angeordneten flächigen Element 8 verpresst, um eine feste Verbindung herzustellen. Vorzugsweise ist die Haftschicht (durch die Verwendung einer ausreichenden Menge an Klebstoff oder Lösungsmittel) so ausgebildet, dass auch durch die Öffnungen des flächigen Elements hindurch eine Verbindung von Deckplatte 1 und Bodenplatte 2 erzeugt wird.

Auch andere Verbindungsverfahren sind geeignet, eine erfindungsgemäße Probenkammer herzustellen.

Bei der Verwendung von Klebstoff oder Lösungsmittel kann die Verbindungsstelle ggf. ein Zugang für ein Kriechmittel werden. Werden für die Probenkammer Materialien wie PC, PMMA, COC oder COP verwendet, können bei der Verwendung von Ölimmersionen für Mikroskopieanwendungen Öle zwischen der Bodenplatte und der Deckplatte in den Kunststoff eindringen und zu Spannungsrissen führen.

Ein derartiges Einwandern von Kriechmitteln kann beispielsweise durch thermisches Verschweißen der Bodenplatte und der Deckplatte verhindert werden. Dazu wird die Bodenplatte und/oder die Deckplatte streifenförmig entlang ihres Rands über die jeweilige Schmelztemperatur erwärmt; anschließend werden Bodenplatte und Deckplatte miteinander verpresst. Befindet sich zwischen der Bodenplatte und der Deckplatte in dem erwärmten Bereich auch ein Teil des flächenförmigen Elements 8 wird dieses entweder ebenfalls angeschmolzen oder in die angeschmolzene Oberfläche der Deckplatte und/oder der Bodenplatte gedrückt. Durch eine derartige Versiegelung der Seiten mittels thermischem Verschweißen wird ein Eindringen der meisten Kriechmittel verhindert. Wegen der streifenförmigen Erwärmung können, im Gegensatz zu einer flächigen Erwärmung der gesamten Bodenplatte und/oder Deckplatte, Verformungen der Bodenplatte oder Deckplatte vermieden werden.

Das Verpressen der Grundplatte und der Bodenplatte erfolgt in zwei Schritten. Für jeden der beiden Schritte wird ein anderer Pressstempel verwendet. In einem ersten Schritt werden nur planare Bereiche der Deckplatte mit Druck beaufschlagt. Dafür weist der erste Pressstempel Aussparungen an den Erhöhungen der Deckplatte entsprechenden Stellen auf, so dass diese nicht mit Druck beaufschlagt werden. Der zweite Pressstempel ist derart ausgebildet, dass damit nur die nichtplanaren Bereiche, insbesondere die Erhöhungen, der Deckplatte mit Druck beaufschlagt werden. Dazu kann der zweite Pressstempel wenigstens teilweise eine komplementäre Form zu den Erhöhungen der Deckplatte aufweisen. Alternativ kann der zweite Pressstempel auch planar ausgebildet sein und insbesondere keine Aussparungen an den Erhöhungen entsprechenden Stellen aufweisen; damit könne dann nur die Erhöhungen der Deckplatte mit Druck beaufschlagt werden. Bei diesem Zweischrittverfahren ist die Verwendung eines weichen Materials möglich aber nicht erforderlich. Weiterhin können die beiden Pressschritte in anderer Reihenfolge durchgeführt werden.

Werden die Bodenplatte und die Deckplatte unter Verwendung eines Lösungsmittels verbunden, ist es von Vorteil, wenn das flächige Element ein Material umfasst, das durch dieses Lösungsmittel nicht aufgelöst werden kann. Allerdings kann das flächige Element ein Material umfassen, das durch ein anderes Lösungsmittel aufgelöst werden kann. In diesem Fall können zuerst die Bodenplatte und die Deckplatte unter Verwendung des ersten Lösungsmittels verbunden werden. Wenn die gesamte der Deckplatte zugewandte Seite der Bodenplatte mit dem ersten Lösungsmittel behandelt wird und das flächige Element unmittelbar auf der Bodenplatte aufliegt, drückt sich das flächige Element bei dem Verpressen in die Bodenplatte ein. Nach dem Aushärten der Haftschicht kann ein Lösungsmittel in das Reservoir eingebracht werden, durch das das flächige Element aufgelöst, die Bodenplatte und die Deckplatte jedoch nicht angegriffen wird. Der verbleibende Abdruck kann als Lokalisierungsraster verwendet werden.

Die durch die Öffnungen in dem flächigen Element gebildeten Mikroreservoire können bei verschiedenen Analyseverfahren eingesetzt werden. Beispielsweise können in den Mikroreservoiren Suspensionskulturen gehalten werden, die dann bei einem Mediumsaustausch in dem Reservoir nicht weggespült werden. Da in den Mikroreservoiren auch bei einem Fluss durch das Reservoir nur sehr geringe Strömungsgeschwindigkeiten herrschen, verbleiben auch nichtadhärente Zellen oder Moleküle in den Öffnungen. Weiterhin ist ein schneller Lösungsaustausch in dem Reservoir möglich, da die Diffusionsbarriere in einem Bereich von höchstens mehreren 100 µm liegt.

Weiterhin können mit derartigen Probenkammern chemotaktische Untersuchungen durchgeführt werden. Wird in der Flüssigkeit in dem Reservoir ein Konzentrationsgradient einer Substanz ausgebildet, kann beispielsweise die Wanderung von zuvor in den Öffnungen des flächigen Elements gleichmäßig verteilten Zellen in eine Richtung innerhalb der Mikroreservoire beobachtet werden. Anschließend kann die Verteilung von chemotaktisch sensitiven Zellen in den verschiedenen Mikroreservoiren statistisch untersucht werden, um Aussagen über die Zellmobilität zu treffen. Bei Einsatz einer regelmäßigen Anordnung der Öffnungen, beispielsweise bei Verwendung eines Netzes, können auf der Fouriertransformation beruhende Algorithmen für die Analyse von Verteilungen in Netzstrukturen verwendet werden.

Durch eine geeignete Wahl der Anordnung der Öffnungen in dem flächigen Element kann man Zellen in einer bestimmten Morphologie wachsen lassen. Beispielsweise können Netze mit Maschenweiten eingesetzt werden, die in der Größenordnung der Zellen liegen oder kleiner sind. Die Maschenweiten können beispielsweise 2 µm bis 100 µm betragen. In größeren Maschen können Zellen in einer dreidimensionalen Struktur wachsen.

In dem durch die Aussparung 3 gebildeten Reservoir kann die Oberfläche der Deckplatte 1 und der Bodenplatte 3 mit einer Korona-Behandlung oberflächenbehandelt, insbesondere hydrophilisiert werden. Besonders geeignete Materialien für die Boden-und Deckplatte sind in diesem Fall COC, COP oder PS. Das Plasma wird unter Über-oder Atmosphärendruck erzeugt. Dazu kann gewöhnliche Umgebungsluft verwendet werden. Bessere Resultate lassen sich jedoch bei der Verwendung von Stickstoff als Wirkgas erzielen. Das Plasma kann nach seiner Erzeugung durch ein Durchgangsloch 5 in das durch die Aussparung 3 gebildete Reservoir geleitet werden. Die entsprechende Plasmaaktivierung zeigt sich dann beispielsweise durch ein Aufleuchten des Plasmas im Reservoir.

Durch eine Kühlung des Plasmagases und/oder der Probenkammer kann ein Anschmelzen oder Verbrennen des Materials der Bodenplatte, Deckplatte und des flächigen Elements verhindert werden. Durch die Kühlung kann weiterhin eine Verformung der Elemente der Probenkammer verhindert werden. Ein weiterer Vorteil einer derartigen Plasmabehandlung besteht darin, dass sich die optischen Eigenschaften von Kunststoffen wie COC, COP, PS, PS, PC oder PMMA nur unwesentlich verändem. Eine derartige Plasmabehandlung ist nicht an die zuvor beschriebenen, speziellen Ausgestaltungen der Probenkammer gebunden.

Falls bei einer der beschriebenen Probenkammern ein Plasmabehandlung durchgeführt wird, wird vorzugsweise ein flächiges Element verwendet, das sich durch die Plasmabehandlung nicht oder nur unwesentlich hydrophilisieren lässt. Auf diese Weise können in den Öffnungen des flächigen Elements wässrige Tropfen besonders gut gehalten werden.

Weiterhin können in den beschriebenen Probenkammern Obertlächenkonzentrationsgradienten an immobilisierten Substanzen in den Reservoiren erzeugt werden. Wie bereits oben beschrieben, kann hierfür nach einer Aktivierung einer Reservoiroberfläche eine nichtreaktive Flüssigkeit in das Reservoir eingefüllt werden. Danach wird eine weitere Flüssigkeit mit den zu immobilisierenden Substanzen bis zu einem bestimmten Punkt des Reservoirs gefüllt, so dass sich zwischen den Flüssigkeiten mit und ohne zu immobilisierenden Substanzen ein Grenzbereich bildet. Zu Beginn kann dieser Grenzbereich ein parabolisches Konzentrationsprofil aufweisen. Nach einer geeigneten Wartezeit sind die Flüssigkeiten durchmischt und die Substanz mit einem definierten Oberflächenkonzentrationsgradienten immobilisiert. Anschließend kann das Reservoir gespült werden.

Die verwendeten Flüssigkeiten können je nach Material der Probenkammer oder Plasma neben den zu immobilisierenden Substanzen weitere Substanzen beispielsweise zur Passivierung oder Aktivierung enthalten. Weiterhin können Katalysatoren zur Einstellung der Reaktionsgenetik bereitgestellt werden. Die zu immobilisierende Substanz kann als Teil eines größeren Komplexes, beispielsweise eines Moleküls, eingebracht werden und dann auf der Oberfläche abgespalten werden. Außerdem kann die Immobilisierung von unterschiedlichen Substanzen in mehreren, aufeinanderfolgenden Schritten durchgeführt werden.

Figur 3 zeigt ein weiteres Ausführungsbeispiel einer Probenkammer mit einem flächigen Element. Im Gegensatz zu dem Ausführungsbeispiel der Figur 1 entspricht in der Figur 3 die Fläche des flächigen Elements nicht mehr der Fläche der Bodenplatte. Stattdessen entspricht die Fläche des Elements 8 der Größe der Aussparung 3. In diesem Fall wird das Element 8 nicht durch die Bodenplatte 2 und die Deckplatte 1 eingespannt. Das flächige Element 8 kann beispielsweise mit einem Klebstoff an der Bodenplatte 2 oder an der Deckplatte 1 (insbesondere an dem Grund der Aussparung) fixiert werden. Alternativ kann das flächige Element mit einem Lösungsmittel angelöst werden und auf diese Weise mit der Bodenplatte oder der Deckplatte verbunden werden. Gemäß einer weiteren Alternative kann das flächige Element ohne feste Verbindung in dem Reservoir angeordnet sein.

Die Abmessungen des flächigen Elements 8 auch etwas größer oder etwas kleiner als die Dimensionierung der Aussparung gewählt werden. In ersterem Fall ist ein Einspannen zwischen Bodenplatte und Deckplatte möglich. Hierfür kann das flächige Element 8 Kantenlängen aufweisen, die um 5 bis 500 µm größer sind als die entsprechenden Abmessungen der Aussparung 3.

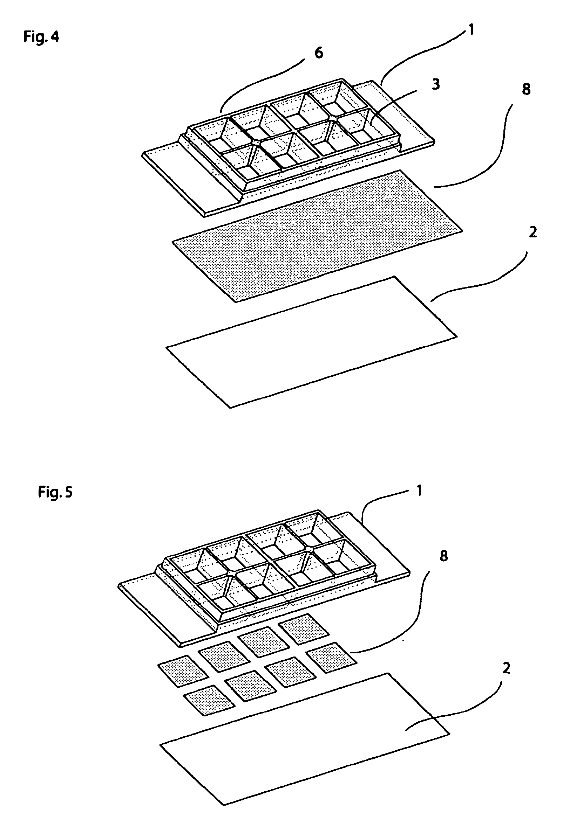

Figur 4 zeigt ein weiteres Ausführungsbeispiel einer Probenkammer hergestellt gemäß der vorliegenden Erfindung. Hier sind in der Deckplatte 1 acht Aussparungen 3 vorgesehen. Diese Aussparungen weisen keinen Grund auf und sind als Loch in der Deckplatte ausgebildet. Durch die entsprechenden Erhöhungen 6 werden acht Reservoire 3 gebildet, die nach oben bzw. außen vollständig offen sind. Entsprechend dem Ausführungsbeispiel von Figur 1 ist auch hier ein flächiges Element 8 vorgesehen, dessen Dimensionen den Abmessungen der Bodenplatte entsprechen.

Bei diesen offenen Reservoiren kann die Bodenplatte von oben durch die Öffnungen des flächigen Elements mit bestimmten Molekülen gespottet werden. Durch die Anordnung der Öffnungen wird die Spotmorphologie verbessert. Insbesondere ist eine gleichmäßigere Verteilung der zu spottenden Moleküle möglich. Durch die Verwendung unterschiedlicher Spots kann beispielsweise getestet werden, welche Molekül-oder Molekül-Zell-Interaktionen statfinden.

In Figur 5 ist eine Probenkammer gezeigt, deren Bodenplatte 2 und Deckplatte 1 den aus Figur 4 entsprechen. In diesem Ausführungsbeispiel ist jedoch für jedes Reservoir ein eigenes flächiges Element 8 vorgesehen. Analog zu dem in Figur 3 gezeigten Ausführungsbeispiel können auch hier die Abmessungen eines flächigen Elements kleiner oder größer als die Dimensionen der entsprechenden Reservoirgrundfläche sein oder eine gleiche Größe aufweisen. Wird das flächige Element nicht zwischen Bodenplatte und Deckplatte geklemmt, kann es entweder fest mit der Bodenplatte verbunden werden oder lose aufliegen.

## Patentansprüche

1. Verfahren zum Herstellen einer Probenkammer mit den Schritten:
Bereitstellen einer Deckplatte (1) und einer Bodenplatte, (2) wobei in der Deckplatte (1) eine Aussparung (3) vorgesehen ist, um durch die Bodenplatte (2) ein Reservoir zu bilden, und wobei die der Aussparung (3) gegenüberliegende Oberfläche der Deckplatte einen planaren Bereich und eine Erhöhung (6) aufweist,
Behandeln eines Bereichs der Oberfläche der Deckplatte (1) und/oder der Bodenplatte, (2) um eine Haftschicht zu erhalten,
Verpressen der Deckplatte (1) und der Bodenplatte, (2) um diese mittels der Haftschicht zu verbinden, wobei der planare Bereich und die Erhöhung (6) in voneinander getrennten Schritten wenigstens teilweise mit Druck beaufschlagt werden.

2. Verfahren nach Anspruch 1, wobei das Behandeln ein Aufbringen eines Klebemittels, ein Aufbringen eines Lösungsmittels zum Anlösen der Oberfläche, eine UV-Behandlung, eine radioaktive Behandlung oder eine Laserbehandlung umfasst

3. Verfahren nach Anspruch 1 oder 2, wobei das Behandeln ein Erwärmen der Bodenplatte (2) und/oder Deckplatte (1) über den Materialschmelzpunkt umfasst.

4. Verfahren nach Anspruch 3, wobei das Erwärmen streifenförmig entlang des Rands der Bodenplatte (2) und/oder der Deckplatte erfolgt.

5. Verfahren nach einem der vorangegangenen Ansprüche, wobei die Druckbeaufschlagung des planaren Bereichs mittels eines Presselements erfolgt, das an den Erhöhungen (6) entsprechenden Stellen Aussparungen aufweist.

6. Verfahren nach einem der vorangegangenen Ansprüche, wobei für die Druckbeaufschlagung der Erhöhungen (6) ein zweitens Presselement vorgesehen ist, das eine zu den Erhöhungen (8) der Deckplatte (1) komplementäre Form aufweist.

7. Verfahren nach einem der vorangegangenen Ansprüche, wobei die Aussparung (3) in der Deckplatte (1) einen Grund aufweist, so dass durch die Bodenplatte ein Hohlraum gebildet wird.

8. Verfahren nach einem der vorangegangenen Ansprüche, wobei die Deckplatte (1) und/oder die Bodenplatte (2) einen von außen in das Reservoir mündenden Kanal, insbesondere ein Durchgangsloch (5), aufweisen.

9. Verfahren nach einem der vorangegangenen Ansprüche, wobei die Bodenplatte (2) eine Dicke von 50 - 250 µm, vorzugsweise 100 - 200 µm, aufweist.

10. Verfahren nach einem der vorangegangenen Ansprüche, wobei die Deckplatte (1) und/oder die Bodenplatte (2) einen Kunststoff, insbesondere ohne Doppelbrechung und/oder Eigenfluoreszenz, umfassen.

11. Verfahren nach einem der vorangegangenen Ansprüche, wobei in dem Reservoir ein flächiges Element (8) mit Öffnungen vorgesehen ist, wobei die Öffnungen eine vorherbestimmte Anordnung und/oder Dimensionierung aufweisen.

12. Verfahren nach Anspruch 11, wobei das flächige Element (8) ein Gewebe, insbesondere ein Netz, oder eine Folie umfasst.

13. Verfahren nach Anspruch 11 oder 12, wobei das flächige Element (8) parallel zu der Bodenplatte (2) angeordnet ist.

14. Verfahren nach einem der Ansprüche 11 - 13, wobei das flächige Element (8) zwischen der Bodenplatte (2) und der Deckplatte (1) eingespannt ist.

15. Verfahren nach einem der Ansprüche 11 - 14, wobei die Öffnungen in dem flächigen Element Durchmesser von 2 - 500 µm, vorzugsweise 10 - 200 µm, das flächige Element eine Dicke von 3 - 500 µm, vorzugsweise 40 - 300 µm, und/oder das flächige Element einen Abstand zu der Bodenplatte (2) von 0 - 100 µm, vorzugsweise 0 - 10 µm, aufweisen.

16. Verfahren nach einem der Ansprüche 11 - 15, wobei das flächige Element (8) einen Kunststoff umfasst und/oder eine vorherbestimmte Farbe, eine vorherbestimmte Eigenfluoreszenz, insbesondere kleiner oder gleich der Eigenfluoreszenz von COC oder COP oder eines herkömmlichen Deckglases, und/oder einen vorherbestimmten Brechungsindex, insbesondere größer als 1,2 und/oder kleiner als 1,7, aufweist.

## Claims

1. Method of manufacturing a sample chamber according to one of the aforementioned claims with the steps:
Provision of a cover plate (1) and a bottom plate (2), wherein a recess (3) is provided in the cover plate (1) to form a reservoir with the bottom plate (2) and wherein the surface of the cover plate opposite the recess (3) has a planar region and a prominence (6);
Treatment of a region of the surface of the cover plate (1) and / or bottom plate (2) to obtain an adhesion layer;
Pressing the cover plate (1) and bottom plate (2) together in order to join them by means of the adhesive layer, wherein the planar region and the prominence (6) are at least partially subjected to pressure in separate steps.

2. Method according to claim 1, wherein the treatment comprises an application of an adhesive, application of a solvent for solubilising the surface, UV treatment, radioactive treatment or laser treatment.

3. Method according to claim 1 or 2, wherein the treatment comprises heating the bottom plate (2) and/or the cover plate (1) above the material melting point.

4. Method according to Claim 3, wherein the heating is performed strip-shaped along the edges of the bottom plate (2) and / or cover plate (1).

5. Method according to one of the aforementioned claims, wherein the application of pressure to the planar region takes place by means of a pressing element which has recesses at points corresponding to the prominences (6).

6. Method according to one of the aforementioned claims, wherein for applying pressure to the prominences (6) a second press element is provided which has a shape complementary to the prominences (6) of the cover plate (1).

7. Method according to one of the aforementioned claims, wherein the recess (3) in the cover plate (1) has a base so that a cavity is formed by the bottom plate (2).

8. Method according to one of the aforementioned claims, wherein the cover plate (1) and / or the bottom plate (2) has a channel, in particular a through hole (5), opening into the reservoir from outside.

9. Method according to one of the aforementioned claims, wherein the bottom plate (2) has a thickness of 50 - 250 µm, preferably 100 - 200 µm.

10. Method according to one of the aforementioned claims, wherein the cover plate (1), and/or the bottom plate (2) comprise a plastic, in particular without double refraction and / or intrinsic fluorescence.

11. Method according to one of the aforementioned claims, wherein a planar element (8) with holes is provided in the reservoir, with the openings having a predetermined arrangement and / or size.

12. Method according to Claim 11, wherein the planar element (8) comprises a fabric, in particular a mesh or a film.

13. Method according to Claims 11 or 12, wherein the planar element (8) is arranged parallel to the bottom plate (2).

14. Method according to one of the aforementioned claims, wherein the planar element (8) is clamped between the bottom plate (2) and the cover plate (1).

15. Method according to one of the claims 11 - 14, wherein the holes in the planar element have diameters of 2 - 500 µm, preferably 10 - 200 µm, the planar element can have a thickness of 3 - 500 µm, preferably 40 - 300 µm and / or the planar element has a distance to the bottom plate (2) of 0 - 100 µm, preferably 0 - 10 µm.

16. Method according to one of the claims 11 - 15, wherein the planar element (8) has a predetermined colour, a predetermined intrinsic fluorescence, in particular lower or equal to the intrinsic fluorescence of COC or COP or a conventional cover slip, and / or a predetermined refractive index, in particular higher than 1.2 and / or lower than 1.7.

## Revendications

1. Procédé pour fabriquer une chambre d'échantillon, avec les étapes qui consistent :
à préparer une plaque de recouvrement (1) et une plaque de fond (2), étant précisé qu'il est prévu dans la plaque de recouvrement (1) un évidement (3) pour former grâce à la plaque de fond (2) un réservoir, et que la surface de la plaque de recouvrement opposée à l'évidement (3) présente une zone plane et une saillie (6),
à traiter une zone de la surface de la plaque de recouvrement (1) et/ou de la plaque de fond (2) afin d'obtenir une surface adhérente,
à comprimer la plaque de recouvrement (1) et la plaque de fond (2) afin de les relier à l'aide de la couche adhérente, étant précisé que la zone plane et la saillie (6) sont soumises au moins en partie à une pression lors d'étapes séparées.

2. Procédé selon la revendication 1, étant précisé que le traitement comprend l'application d'un adhésif, l'application d'un solvant pour corroder la surface, un traitement UV, un traitement radioactif ou un traitement laser.

3. Procédé selon la revendication 1 ou 2, étant précisé que le traitement comprend un chauffage de la plaque de fond (2) et/ou de la plaque de recouvrement (1) au-dessus du point de fusion du matériau.

4. Procédé selon la revendication 3, étant précisé que le chauffage se fait par bandes le long du bord de la plaque de fond (2) et/ou de la plaque de recouvrement (1).

5. Procédé selon l'une des revendications précédentes, étant précisé que la contrainte de pression de la zone plane se fait à l'aide d'un élément presseur qui présente des évidements à des endroits correspondant aux saillies (6).

6. Procédé selon l'une des revendications précédentes, étant précisé que pour la contrainte de pression des saillies (6), il est prévu un second élément
presseur qui présente une forme complémentaire de celle des saillies (6) de la plaque de recouvrement (1).

7. Procédé selon l'une des revendications précédentes, étant précisé que l'évidement (3) prévu dans la plaque de recouvrement (1) présente un fond, de sorte qu'une cavité est formée par la plaque de fond (2).

8. Procédé selon l'une des revendications précédentes, étant précisé que la plaque de recouvrement (1) et/ou la plaque de fond (2) présentent un conduit, en particulier un trou traversant (5), qui débouche de l'extérieur dans le réservoir.

9. Procédé selon l'une des revendications précédentes, étant précisé que la plaque de fond (2) présente une épaisseur de 50-250 µm, de préférence de 100-200 µm.

10. Procédé selon l'une des revendications précédentes, étant précisé que la plaque de recouvrement (1) et/ou la plaque de fond (2) comprennent une matière plastique, en particulier sans biréfringence et/ou fluorescence propre.

11. Procédé selon l'une des revendications précédentes, étant précisé qu'il est prévu dans le réservoir un élément plat (8) avec des ouvertures, et que ces ouvertures présentent une disposition et/ou un dimensionnement définis préalablement.

12. Procédé selon la revendication 11, étant précisé que l'élément plat (8) comprend un tissu, en particulier un filet, ou un film.

13. Procédé selon la revendication 11 ou 12, étant précisé que l'élément plat (8) est disposé parallèlement à la plaque de fond (2).

14. Procédé selon l'une des revendications 11 à 13, étant précisé que l'élément plat (8) est serré entre la plaque de fond (2) et la plaque de recouvrement (1).

15. Procédé selon l'une des revendications 11 à 14, étant précisé que les ouvertures prévues dans l'élément plat présentent un diamètre de 2-500 µm, de préférence de 10-200 µm, que l'élément plat présente une épaisseur de 3-500 µm, de préférence de 40-300 µm, et/ou que l'élément plat présente par rapport à la plaque de fond (2) un écartement de 0-100 µm, de préférence de 0-10 µm.

16. Procédé selon l'une des revendications 11 à 15, étant précisé que l'élément plat (8) comprend une matière plastique et/ou une couleur définie préalablement, une fluorescence propre définie préalablement, en particulier inférieure ou égale à la fluorescence propre de COC ou COP ou d'une lamelle classique, et/ou un indice de réfraction défini préalablement, en particulier supérieur à 1,2 et/ou inférieur à 1,7.
